# EUROPEAN PATENT APPLICATION

(11) **EP 2 169 039 A2**
(43) Date of publication of application: **31.03.2010**
(21) Application number: 08787618.1
(22) Date of filing: 19.06.2008
(51) Int. Cl.: C11C 3/00, B01D 3/00, B01J 3/00, B01D 3/14

(54) **INSTALLATION FOR PRODUCTION OF BIODIESEL**

(30) Priority: 19.06.2007 ES 200701686; 19.06.2007 ES 200701687; 19.06.2007 ES 200701688
(71) Applicant: Beeb Bioenergias, S.A., 46950 Chirivella (Valencia) (ES); Perez Celada, Guillermo, 46017 Valencia (ES)
(72) Inventor: PEREZ CELADA, Guillermo, E-46017 Valencia (ES); MONTESINOS ALONSO, Vicente, E-46009 Valencia (ES)
(74) Representative: Sanz-Bermell Martinez, Alejandro
(86) International application number: PCT/ES2008/000437
(87) International publication number: WO 2008/155436

(57) **Abstract**

This comprises;
• Possibly a support structure (5);
• A tough body or filling (6);
• A set of vessels fitted or formed in the filling of said support structure (5) or tough body (6);
• A reactor circuit which comprises the supply of the reagents from at least one pumping device through a first set of heat exchangers (2), a second set of heat exchangers (3) and/or a set of reaction units (4); and
•A heat-insulating filler (7) fitted between items (2, 3, 4) constituting the reactor and the vessels formed in the structural filling of the structure,
• A pumping device with a piston placed inside the recipient from which the product to be pumped is taken,
A distillation device.

## Description

This invention refers to an installation for biodiesel production in supercritical conditions, at high pressure and temperature.

The non-sustainability of fossil fuels is a well-known fact that has taken on particular relevance in recent times. The demand for fuels has at the same time been growing, on both industrial level and for use in means of transport. The use of fossil fuels in countries depending on external energy sources, as is the case of Spain and many other countries without any oil production or where this is very scanty in comparison with the demand, therefore destabilizes the balance of payment of the state in question.

Today a very central role is being taken by bioenergies, including biofuels, which along with hydrogen, constitute the future of automobiles.

This is due both to the growing awareness of the deterioration of the planet and to the search for alternatives to petroleum, which though proving cheap at present will see a rising price tendency over time, due to the instability of middle-eastern countries and through being finite energy.

The degree of contamination (greenhouse effect, acid rain, etc.) constitutes a problem to which industrial countries, including the E.U., are reacting. It is enough to simply mention the agreement which has been reached by the twenty-seven E.U. member countries, by means of which they will have to consume 20% clean energies by 2020, this being compulsory for all of these. Within this framework at least 10% of the total consumption of fuels is assigned to biofuels.

As one of these biofuels, biodiesel has taken on great importance, there being a growing tendency to set up industrial plants for its production, based mainly on the process of transesterification of triglycerides by means of basic catalysis.

Catalyzed processes, which cause cleavage of the triglyceride bonds by adding a catalyst product, later on require the separation of the catalyst by means of a second process. In this type of processes the proportions of the different raw materials have to be exhaustively adjusted, and soaps can be formed; washing stages are required and waste such as salts, soapy water is generated; the resulting products do not have a satisfactory purity through being contaminated by the catalyst, and require long reaction times.

There are also supercritical processes (for alcohol), in which the reaction takes place at high pressure and temperature, the reaction is spontaneous and fast, in which an alcohol is required to facilitate cleavage of the bond linking the glycerin with the fatty acids and enabling the formation of glycerol on one hand and esters on the other.

The reactors used in supercritical processes involve the disadvantage that there may be breakages or leaks, due to the high pressures attained, which in addition to the high temperatures entail a high risk of explosion or fire, and in short a great degree of danger.

One of the problems arising in this type of processes is that of leaks in the pumping processes for inserting the affluent products inside the reactor and providing the system with the required pressure.

The present invention therefore also extends in a subsidiary manner to a pumping device.

In biodiesel production installations there has to be a supply of mechanical energy to the affluent fluid in order to carry out the process of transesterification of the fats used. This mechanical (hydromechanical) energy is achieved by carrying out pumping to provide a certain speed, and depending on the circuit's means for retention, also a certain increase in pressure.

In this type of installations working with dangerous products, there may be large or small leaks in the pumping systems, in such a way that the leaking product may prove inflammable or explosive.

Apart from this, flameproof pumps have to be used for pumping these products to prevent the aforementioned risks.

Electrically-powered flameproof pumps are highly costly, for which reason the insulation fitted on them has to be remarkably accurate and reliable.

Furthermore, the power supply cables of these pumps also have to meet the required production conditions.

A hydraulically-driven pumping device is therefore proposed, said hydraulic drive means being able to be remotely activated by means of a conventional motor, and the hydraulic energy transferred to the hydraulic pump covered by the invention by means of the relevant conduits.

The pumping device forming part of the installation of the present invention consists of a hydraulically-powered device driven, for example, by electrical means, which acts on a conductor piston, and this in turn acting on a driven piston by means of a direct or indirect connection, said driven piston providing the necessary pressure to the fluid for its incorporation in the process in question.

The installation of this invention uses a continuous condenser distiller device for a mixture to be separated, also a subsidiary object of this invention.

Distiller devices are necessary elements for the separation of different fractions, such as the ones stemming from a reaction process. In particular, the process of installing the invention must involve separating the alcohol provided in the process of pumping the glycerins constituting the biodiesel obtained from the installation process that we are describing.

There are distiller devices such as distillation columns, in which the different products or mixes of products are extracted depending on their state in certain pressure and temperature conditions, normally obtaining a liquid phase and a gaseous phase.

Each of these phases may include one or more products, which may be subject to further distillation modifying the pressure and temperature conditions to obtain differentiated phases again and be able to proceed to the relevant extraction.

Many of the continuous devices used at the present time are highly costly and therefore difficult to apply for certain functions, where economy is vital due to the scale factor in question, the costs being particularly sensitive for small and medium-sized installations, but with low costs also being satisfactory for large installations.

Apart from the installation costs, the energy costs of distillation are particularly relevant, since apart from the heat that needs to be provided for boiling, an additional provision of energy must be made for condensation.
It is thus desirable to have a low-cost device enabling a progressive sequential interaction between the liquid and gas phases, providing heat from the effluents, so as to be able to easily separate the whole content of the more volatile fraction of the mixture to be distilled, the provision of heat facilitating the condensation of the vapor extracted and the recovery of the energy supplied by the pumping system.

### STATE OF THE ART

JP 2001 031991 discloses a supercritical process for producing fuels from animal fats, which includes a supply of organic fats and an alcohol supply, means for pumping the reagents, means for providing heat, means for recovering heat and means for separating the effluents.

WO 2007/026032 discloses a supercritical reactor for supercritical alcoholysis of all kinds of fats and oils with different types of alcohols, in which it describes a reactor which carries out the JP 2001 031991 process. Said invention does not however solve the problem of the danger, nor does it enable a plant to be built by the juxtaposition of different basic modules.

The object of the invention now being proposed is a reactor for obtaining biodiesel from organic fats which carries out the process described by JP 2001 031991, in which the problem of the danger through leaks or explosion risk is solved, at the same time as allowing a modular construction from a set of modules with uniform characteristics, easy to build and thus with a low cost, in zones in which the heat exchange rate is important.

ES 2007920 discloses a vapor/liquid contact structure, which includes a set of bubble plate chambers vertically spaced with respective liquid and vapor contact devices for adapting the contact of crosscurrent flows of liquids in reflux and vapors.

### BRIEF DESCRIPTION OF THE DRAWINGS

In order to illustrate the following explanation, we are enclosing ten sheets of drawings with this report, in which the essence of this invention is shown in eleven figures, and in which:

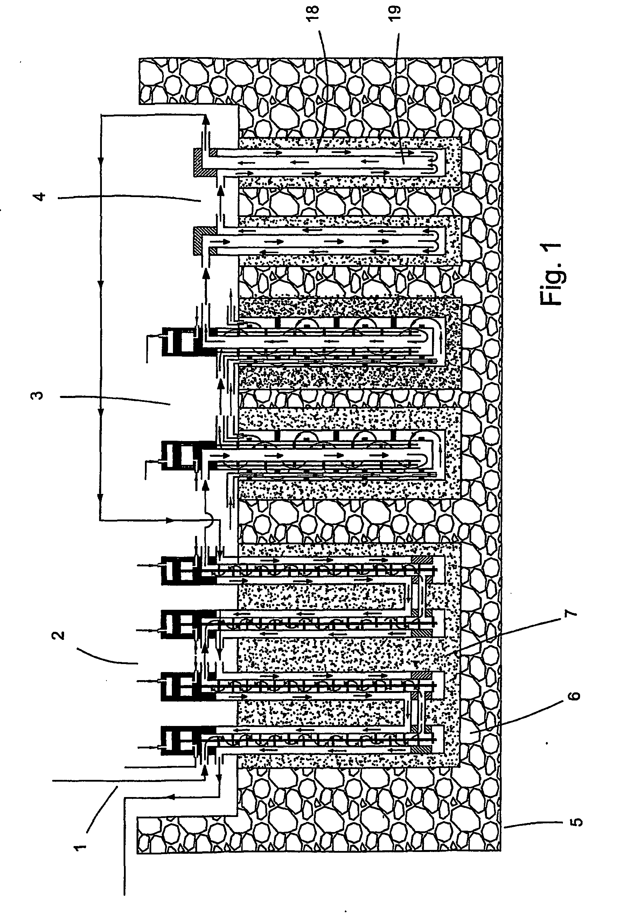

- Figure 1: shows a schematic view of the reactor of the invention;
- Figure 2: shows an extended partial view of a set of primary heat exchangers forming part of the reactor of Figure 1;

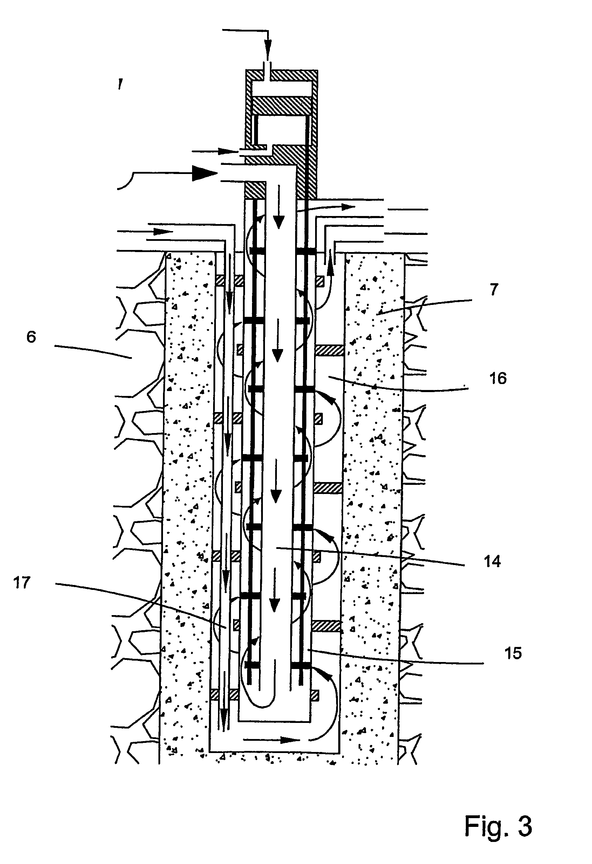

- Figure 3: shows an extended partial view of a secondary heat exchanger, which like those in Figure 2, also forms part of the reactor of Figure 1;

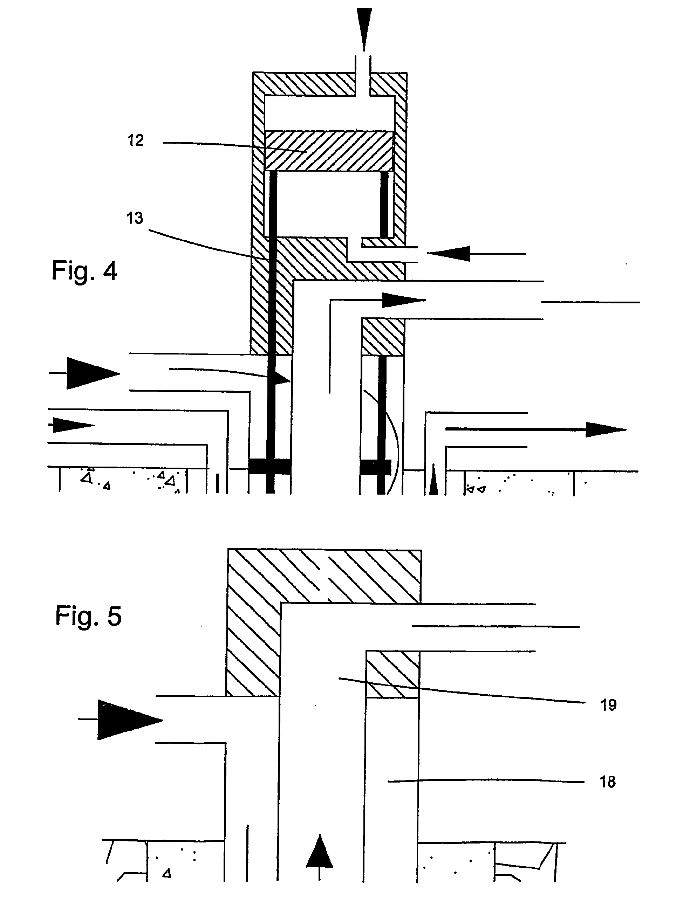

- Figure 4: shows a view of a detail of a drive device for the means of cleaning the exchangers of Figure 2, these being similar to the ones represented in Figure 3; and
- Figure 5: shows a detail of the head of the reactor vessels of Figure 1;

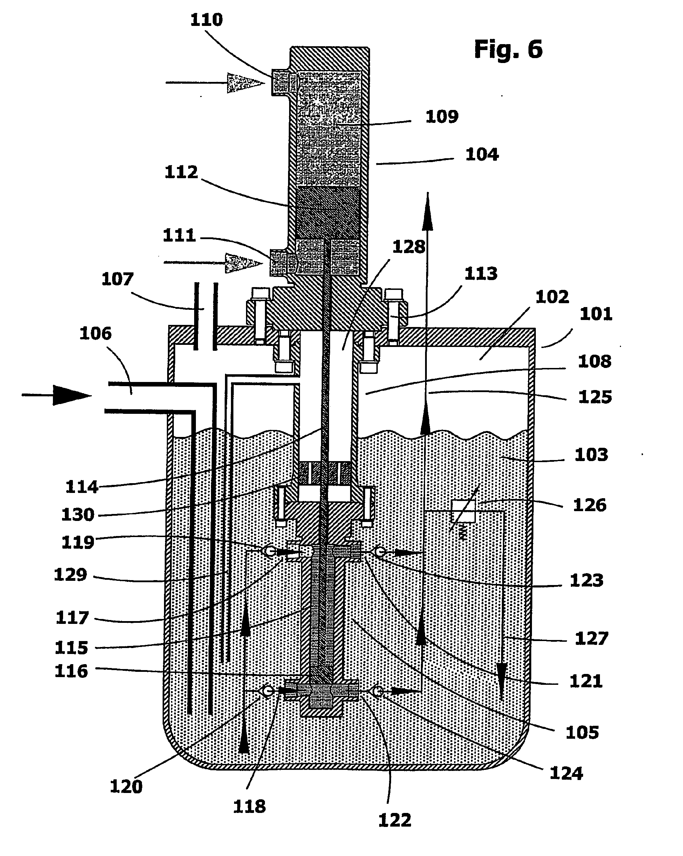

- Figure 6: shows a schematic section view of the pumping device of the installation of the invention;

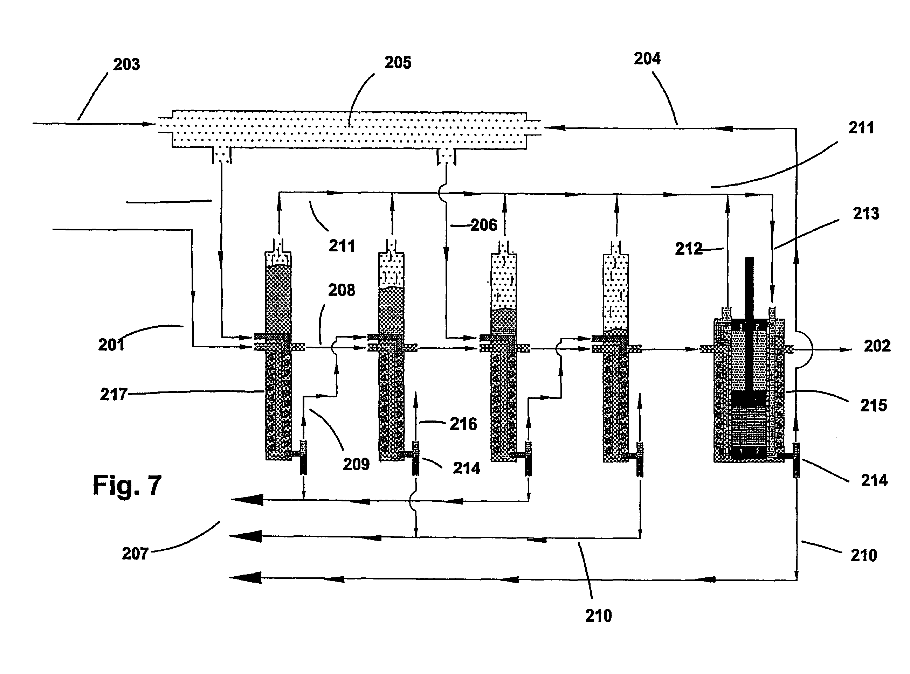

- Figure 7: shows a schematic section view of the distiller used in the installation of the invention in which, as an example, there are four distiller vessels and a compressor body;

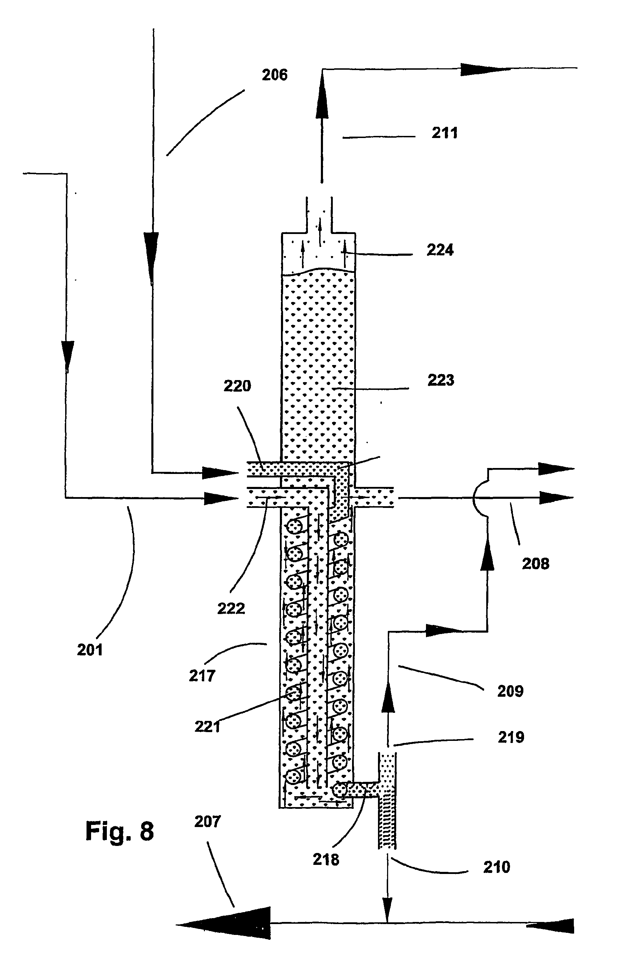

- Figure 8: shows a detailed view of one of the distiller vessels of Figure 7;

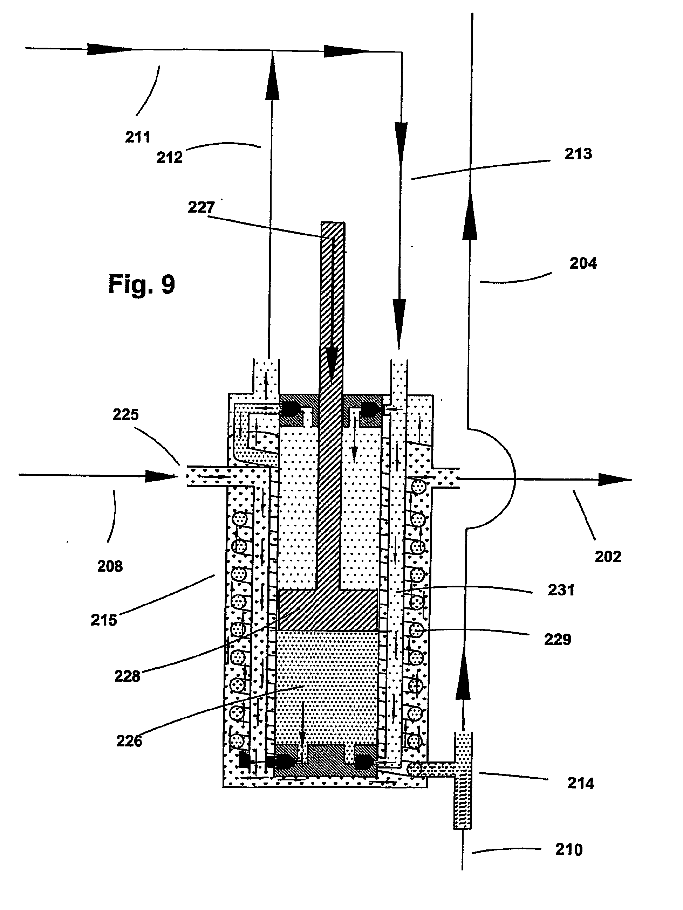

- Figure 9: shows a detailed view of the pumping device;

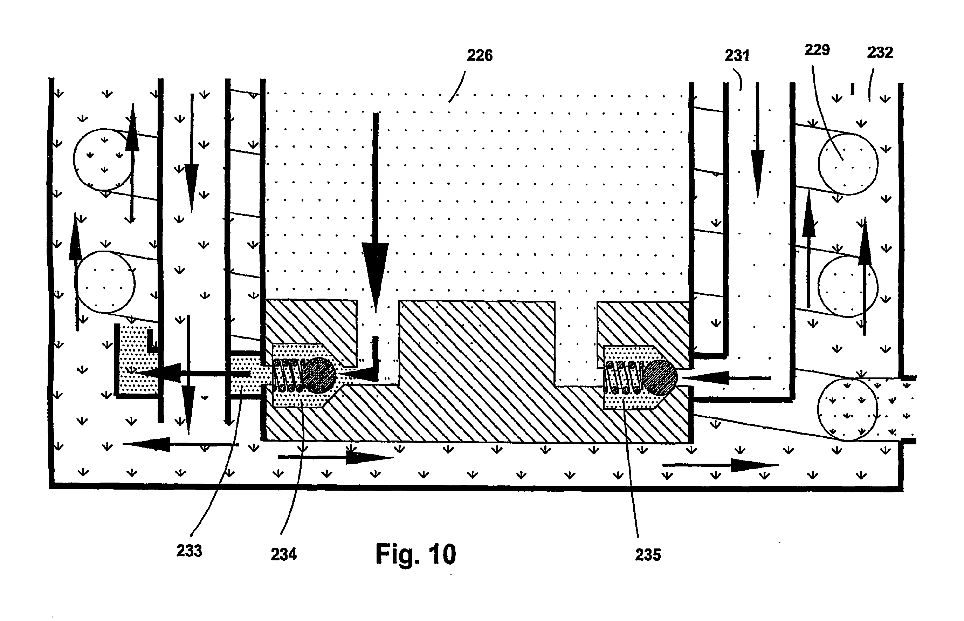

- Figure 10: shows an extended view of the lower part of the pumping device (as represented on paper and according to proper positioning in an installation); and

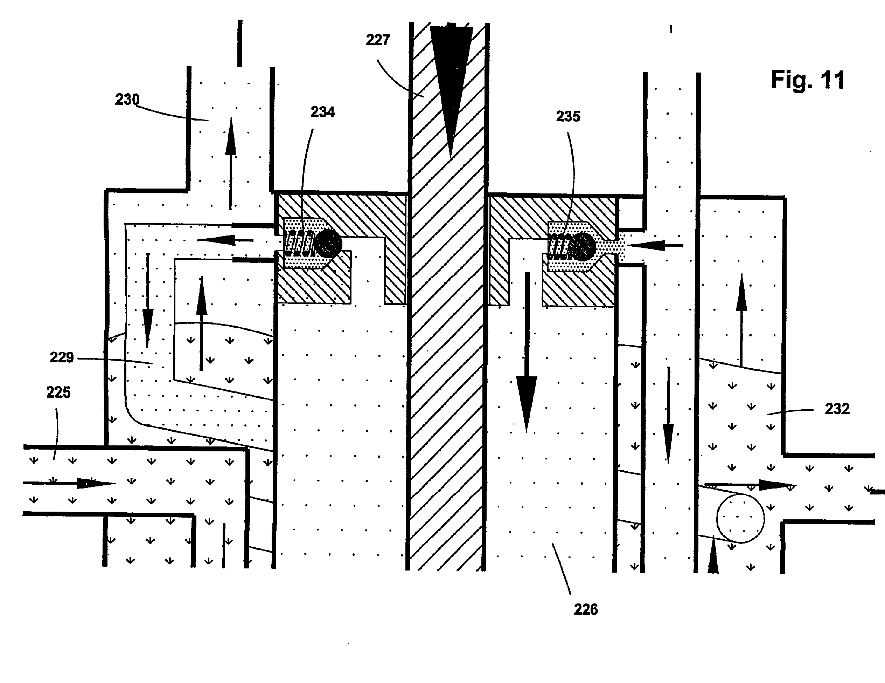

- Figure 11: shows an extended view of the upper part of the pumping device.

### DETAILED DESCRIPTION OF THE INVENTION

In line with the adjoined figures, there now follows a description of a reactor for biodiesel production, running in supercritical conditions, that is, in high temperature and pressure conditions. For carrying out this process, as described in the previous patents, it requires a pumping device, a reactor and a device for distilling the effluents. Fats or vegetable oils and alcohol, usually methanol, are used as materials for treatment.

The supply of alcohol and fats or oils may be done by a single pumping means or by independent pumping systems, on condition that these items are incorporated in the reactor at the required pressure.

This description is thus of a reactor which includes at least one inlet line 1 for the oil or fat and the alcohol, which goes through a set of primary heat exchangers 2, which make use of part of the heat energy supplied to the system, a second set of exchangers 3 that obtain the heat energy by means of a thermal fluid, such as thermal oil, from an external heat source, which will raise the temperature of the reagents to the required value, and finally goes on to reactors 4 where the reaction will be completed.

The products used in the aforementioned process are known to be highly dangerous, through being combustible materials whose risk of inflammability and explosiveness rises with pressure and temperature. For this reason it has been envisaged that at least the set of exchangers and reactors should be located in at least one box or casing 5, able to retain, at least during the manufacturing stage, a tough filling material 6. This box or casing can preferably be made so as to be extremely tough, so that in the event of any possible leak causing an explosion, said box provided with said filling 6 can withstand the tensions arising through said explosion, forcing any emission upwards, to the covered or open top. Since this is a non-accessible zone during the reaction process, any possible risks that could exist for this reason are minimized.

It has been envisaged that the outer casing should be made of steel and/or the filling material 6 should be mass or reinforced concrete, due to its low price as compared with other materials, as well as its excellent strength qualities. Nevertheless, any other material performing the same function will also be acceptable. In particular, the outer casing could also be the tough layer, such as a steel body, directly constituting the relevant insulating material, with no tough filling.

For the installation to be totally accessible, a set of vessels are set in said filling material, only accessible from the top, in which the different parts of the installation, such as primary exchangers 2, secondary ones 3 or reactors 4 will be fitted from the top. This does not constitute any limit to other auxiliary items being added to the assembly, such as boilers, pumps, distillers or others. The installation can be joint in a single block or also be modular, that is, for the different parts of this installation to be arranged in separate modules or casings, each provided with its relevant filling material or not.

The installation is assembled on site, and since the reactor support item does not include the filling, apart from the modularity of said installation, the cost is considerably lowered in respect of a conventional set-up. It should be stressed that all the items in each group (primary and secondary exchangers and reactors) are preferably identical to each other, facilitating and enormously improving the manufacture, some installations being different from others only in the number and arrangement of the different items.

To improve the insulation of the installation and prevent any heat loss through the filling material, it has been designed for an insulating material 7, such as thermal sand (dry, heat-insulating sand), or any other which complies with the insulation and heat resistance requisites, to be fitted between the different exchanger items 2, 3 and reactors, 4 and the tough filling material.

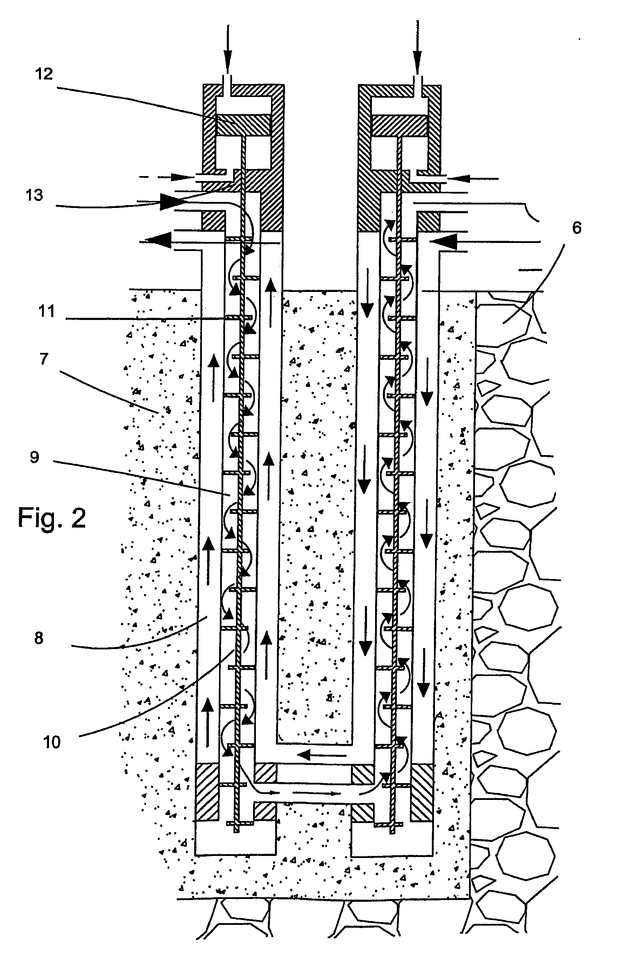

As has already been mentioned, the installation consists of an inlet line 1 for the reagents at a certain pressure. These reagents first go through a set of primary heat exchangers 2, by means of which they take heat from the outgoing products. These primary heat exchangers 2 can be connected in series and/or in parallel. The primary heat exchangers have been designed to be formed in pairs of tubes or vessels vertically laid out and joined together at their lower base, and with external connections at the top of each of these. As can be seen from Figure 2, each item of each pair of the primary exchangers includes a pair of concentric tubes, so that the fluid to be heated goes through the inside tube 9, while the hot fluid from the process returns outside via the outside tube 8, or vice versa.

One of the problems arising through the use of fats and oils at high temperatures (around 300°) is the appearance of deposits and soot on the walls of the installation. Although such deposits are not relevant for the reagent transformation process, a certain degree of deposits will reduce the performance in the heat exchanging process in the different exchangers.

For this reason, the exchangers have been designed to include a scraping device, at least in the part of these through which the fluid to be heated circulates. This scraping device consists of a bar or rod 10 able to perform to and fro movements inside the reactor, and has a set of scraper media 11 such as half-washers set in alternately opposite positions, which as well as improving the cleanliness of the device facilitates turbulent circulation of the cold liquid and the best heat exchange rate with the hot focus.

The bars or rods 10 are moved by means of a hydraulic piston 12 set in the top of the tubes (it could be at the bottom, but this would require longer flexible hoses or conduits and any leak would be hard to detect, without entailing any advantage), and it would be supplied by oil or fat and/or alcohol from a supply tank, which could or could not be the same as that of the main supply. The supply pressure of said hydraulic piston 12 is slightly over the pressure existing inside the reactor, and is preferably driven by a separate pumping device, even though it could also be driven by the main pumping device. The drive pressure of the pump is similar and any possible leaks through the joint 13 which joins said hydraulic piston with said rod 10 are minimized. Nevertheless, given the design of the structure, any possible leakage will be incorporated to the circuit as a reagent, for which reason said possible leaks through the dynamic joints do not mean any problem.
The hydraulic piston is controlled separately from the fluid circulation, and may have a supply and valves common to all or several of these or have independent supplies and/or valves for each one.

The exchangers formed by each pair are essentially identical and will be communicated with each other at the bottom, so that the fluid going down one will be going up the other and vice versa.

When there is more than one set of primary exchangers these will be connected together by the relevant couplings set at the top.

The number of exchangers is not limited, and will be arranged in the right number and position for each installation.
The secondary exchangers 3 are similar to the primary ones, but in these it has been envisaged that they are not formed by pairs, but formed by a single body with at least three concentric tubes, in which the reagents are supplied from the lower tube 14 to the intermediate tube 15, and the exchange of heat takes place between this 15 and the outer tube 16, through which a thermal fluid will be made to circulate at the appropriate temperature. The circulation could also take place in any other combination. Like the primary exchangers, they can be connected together in series and/or in parallel depending on the requirements for each installation. The thermal fluid is intended to be injected by the relevant conduit 17 to the bottom of the secondary exchanger. The pressure of the thermal fluid does not need to be high as it does not participate in the reaction, and only requires the mechanical energy to be moved through the different elements.

As for the primary exchangers, there may be as many secondary exchangers as are necessary to obtain the appropriate temperature of the reagents.

In these secondary exchangers, the scraping device has been designed to be annular, the corresponding scraper rings leaving the gaps necessary for the reagents to get through and to produce the required turbulence in these.

Given that the scrapers are annular, to maintain the balance in the forces that arise as the walls of the intermediate tube 15 are being scraped, more than one coupling rod 10 of the scraper devices has been designed, as well as their relevant number of joints 13.

The reactor elements 4 consist of a pair of concentric tubes 18 and 19, through which the reagents are made to go at the temperature already attained in the exchange phase with the secondary exchangers 2 and comprise the number of units required for the reaction to be significantly completed. These reactors can be connected in series and/or in parallel.

The reactor elements consist of a pair of concentric tubes 18 and 19 which are set vertically, in which the inlet is in one of these and the outlet in the other. As in the exchangers described above, the connections of the reactors with each other or with other items, are made at the top.

If an installation had some heat loss in the reactor zone, one or more secondary exchangers could be set in between to ensure the right temperature.

As any possible leak would take place at the top, in order to increase safety, a cover with the proper aeration could be fitted in order to prevent any accumulation of inflammable gases, including at least one gas detector so that any possible leak in the different circuits forming the installation could be monitored at all times.

According to a preferential embodiment, it is proposed that the pumping device should be able to be installed inside a main tank for product supply to a physical or chemical treatment line, or of an auxiliary tank to said main tank, this auxiliary tank being able to consist of an external casing of said device, in any event indicated as 101. Said tank includes an interior receptacle 102 in which there is a certain level of a fluid 103. From the top said tank 101 has a pumping body fitted, consisting of at least two elements and possibly three. These two elements are a hydraulic drive device 104 and a driven device 105, and the third optional element is a spacing body or device 108, to properly adjust the positioning height of the driven hydraulic device in respect of the anchorage zone. The tank comprises a conduit or channel 106 for filling this, as well as a breather or vent 107 which will prevent the accumulation of gases and depressions or overpressures stemming from the device's operation.

The pumping device, as has been stated, comprises a hydraulic drive device 104 which takes the hydraulic energy of an external hydraulic device, possibly but not necessarily driven by means of an electric motor. This hydraulic device can be close to or distant from the pumping device. The hydraulic energy received is transmitted through said hydraulic drive device 104 to a hydraulic driven device 105, by direct mechanical means (by means of a whole or separated common connecting rod) or indirect means (for example, via an intermediate handle mechanism). In the embodiment represented the transmission is by means of a common connecting rod 114.

To move the connecting rod 114, the drive hydraulic device 104 has a chamber 109 through which a piston runs. When the movement has to be driven, the hydraulic energy is allowed in through one of the inlet/outlet mouths 110 or 111 depending on how the relevant valves are operated, and the atmospheric pressure is allowed out by the other 111 or 110, the fluid from which will return to the relevant hydraulic fluid deposit. That is, when the mouth that receives the fluid under pressure is the top one 110 (as shown in the figure, in which the liquid 103 in the tank 1 rests at the bottom of this) and the lower mouth 111 is open to atmospheric pressure, the piston 112 will be forced to produce a downward movement also on the driven hydraulic device 105. When the lower position has been reached, as detected by the relevant device, the lower mouth 111 of the drive hydraulic device 104 will be opened to the source of pressure, and mouth 110 will open up to atmospheric pressure, so the piston 112 will be forced to rise and correspondingly pull along the driven hydraulic device 105.

The pumping devices are held to the tank 101 structure by means of the corresponding anchorage 113, and the assembly can be fitted on said tank as a single unit or in parts with different anchorages.

When the upper piston 112 is moving due to the action of the external hydraulic energy, through being fixed to said piston, the connecting rod 114 is also in movement, forcing in turn the movement of a piston 116 which runs along a chamber 115 forming the driven hydraulic device.

The driven hydraulic device consists of four mouths, two inlets 117 and 118, and two outlets 121 and 122 and four corresponding valves 119, 120, 123, 124. The upper inlet and outlet mouths 117 and 121 can be replaced by a single mouth, on condition that the valves enable or prevent access of the fluid properly, as well as the lower inlet and outlet mouths 118 and 122. The valves can be check valves or selective opening valves. The chamber 115 of this driven hydraulic device will always be full of the fluid 103 existing in the receptacle 102.

When a downward movements starts from the top, the inlet valve 119 will allow the chamber 115 to be filled, due to the depression that will be produced at the top of the piston, making this move. At the same time, the valve 123 will be blocked and prevent the return of any product found in an outlet line 125, driven at the pressure required by the system to which this is supplied. The valve 124 will be open, enabling passage to the outlet line 125, and valve 120 will be blocked preventing the product 103 from returning to the receptacle 102.

When the descent by the driving hydraulic device has been completed, as was described a few paragraphs above, and the upward movement starts, the status or function of the valves changes, so that the valve 120 at the bottom will be open and allow the fluid 103 to refill the chamber 115. Valve 124 will be closed, preventing the product going back from the outlet line, and valve 119 at the top will be closed, preventing the fluid from going back into the receptacle 102, and the valve 123 will be open, allowing the fluid under pressure to be incorporated in the outlet line 125.

The outlet line has been designed to have a safety valve 126 or lambda probe, which opens to allow the product back into the tank when the pressure exceeds the set level, for example due to the partial locking of some outlet valve of the system to which the fluid is incorporated, when the excess fluid goes back into the receptacle 102 through the outlet 127.

Due to the high pressures that might be reached, there might be leaks through the dynamic joints that are fitted on both the hydraulic drive device 104 and the hydraulic driven device 105. Any leak that might be caused in the different hydraulic drive or driven devices will escape to the intermediate chamber 128 set inside the spacing device 108. From this, it will go through a conduit or outlet channel 129, back into the receptacle 102 or into another receiving receptacle for its drainage. It has been designed for a secondary piston 130 to move through the chamber 128 to act as a guide and coupling between the parts of the connecting rod associated with each of the pistons 112 and 116 in the event of said connecting rods forming different parts. Said secondary piston 130 acts as a guide, preventing the warping of the connecting rod 114, and allows the passage of gases and/or fluids from one part to another of said piston 130 by means of the relevant passages or channels existing between its two opposite surfaces (in the direction of the movement).

It has also been designed for the tank or receptacle to comprise at least one level sensor, so that under a certain threshold there should be a refilling or stoppage of the pumping (and that of the apparatus in the system to which the pumped flow is sent). Hence over a certain threshold in the level of the tank 1 this will also have to stop being filled by means of the closure of the corresponding valves.

The assembly of this hydraulic drive device 104, of the driven device 105, of the common connecting rod 114, the secondary piston 130, and the pistons 112, 116 may also be located outside the tank 101 and arranged for example in a horizontal position. In this case, the device has a casing around the common connecting rod 114 and the secondary piston 130, and the mouths 117, 118, 121, 122 are connected to the tank 101 by means of flexible hoses.

Also used in the installation according to the present invention is a distiller device which in a typical application receives a mixture with at least one fraction more volatile than the other. Each of these products has a different boiling point at a certain pressure, and depending on particular concentrations.

As designed in a preferential embodiment, the distiller basically comprises:
- At least one inlet line 201 for the mixture to be distilled;
- At least one inlet line 206 for gas or vapor;
- At least one outlet line 202 for the heavy, non-evaporated fraction;
- At least one outlet line 207 for the non-reacted condensates;
- A set of distiller bodies 217, arranged in series and/or in parallel; these distilling bodies are preferentially essentially identical to each other;
- At least one extraction line 211 for each of the bodies of the elements for distilling the evaporated gases in the mixture; a depression is applied to the extraction line.
- A set of communication lines 208 for the non-volatilized product which is led from the outlet of a distiller body at the inlet of the following one or to a pumping device 215;
- A set of heat exchangers 221, 229 set in the distiller bodies 217 and possibly also in the pumping device 215,
- A selective outlet 214 for each distiller body 217 which enables the separate extraction in lines or conduits corresponding to the liquid phases 210 and gas phases 209;
- And at least one pumping body 215, which on one hand generates the depression necessary in each of the distiller bodies and the compression which will be produced by the overheating of the gas or vapor at the compression outlet; this pumping body 215 is a piston or plunger pump according to a preferential embodiment.

The installation receives on one hand the mixture that has to be distilled through the inlet line 1 which is inserted into a distiller body 217 through the inlet 222 of the distiller. This mixture is able to take heat to facilitate the separation of the phases which form this.

Apart from this the installation also receives gas or vapor from another inlet line 203 of the collector 205 which has to be condensed, and at the same time has to give its heat to the mixture; the gas or vapor stems from the separation process itself through an outlet line 204 from the pumping body 215, which is also the inlet to a gas collector 205, if there is one, coming from a line 3 proceeding in turn from a process external to the distiller, or a combination of both. In the event of the gas inlet having more than one source, a collector or manifold 205 has been designed, to enable the homogenization of the temperature prior to its incorporation in the distilling process through at least one inlet line 206.

The non-condensed gases from the outlet 214 of the distiller bodies 217, which are not led on into a later stage are taken to an external condensation process through an outlet 216 , in a preferential embodiment.

The gases which reach the distiller through the inlet line 206 are inserted into the distiller 217 through an inlet mouth 220 which leads to a heat exchanger 221. In the embodiment shown, this exchanger consists of a vertical coil, with an inlet 220 at the top and outlet 218 at the bottom, since this means that any condensates which may be formed are led to this outlet mouth. In the exchange process the mixture absorbs heat, so that since the pressure is reduced, which is done by the pumping device 215 set downstream of the distillation flow, the light fraction is boiled and has its phase changed, forming a vapor phase 224. Its concentration in the resulting mixture 223 is reduced, so that the vapor from said light fraction is extracted and pumped through the extraction line 211 in order to be incorporated and reused in the gas collector 205. At the same time, the heat passed on to the mixture causes a partial condensation of these gases. The outlet 218 of the distiller body 217 will thus contain a vapor-liquid mixture, which will be selectively removed through the selector 214, so that the condensates get out through the conduit 210 to the condensate outlet line 207, and the gases come out through the conduit 219 to a line 209 for return to a later stage or a line 216 leading to an external condenser, for example. The distiller bodies will have their entrance from the outlet of a previous stage or from the feed lines 201 and 206, and the outlets will lead the mixture to a later stage, to the pumping device, or to the outlet 202 and the light fraction in the vapor phase is taken to a later stage, while the condensates will be led to a condensate outlet 207.

According to a preferential embodiment, the pumping body 215 comprises an inlet mouth 225 which receives the mixture from which a good deal of the light fraction contained has been extracted, and leads this to the chamber 232 set in the pumping body 215. In the same way, this pumping body 215 also receives the gases or vapor of the alcohol via an inlet line 213, normally coming from the extraction lines 211 of the distillation of preliminary stages, which leads to a channel 231 connected with the inlet mouths of chambers 226 which are crossed by means of the compressor piston 228.

By selective opening of the inlet valves 235 the gases are allowed into the chambers 226, crossed in a to and fro movement by the compressor piston 228, in such a way that when the gases or vapor in the chamber 226 reach a certain degree of pressure, the outlet valves 234 open to enable the outlet of compressed gas and lead this to the chamber 233 which is connected at its top end with the exchanger 229.

As stated, the compressor piston 228 moves in a to and fro motion, so that the direction of the movement will compress the gas or vapor in the light fraction, meaning that their temperature will rise. It will lead them to the exchanger 229 from the top, so that after the heat has been passed on to the incoming mixture, these then go out through the selective outlet 214, in which any condensate fraction that might be found there will be led by line 210 to the condensate exit 207, while the gaseous fraction will be taken back into the gas inlet system through conduit 212 to make optimum use of its thermal energy.

It should be stated that when the piston is compressing one zone, the inlet valve 235 will be closed in that zone, while the inlet valve 235 in the depression zone will be open. The outlet valves 234 will be closed until the pressure required is attained.

Due to the increase in temperature through the heat taken from the compressed gases, the mixture in the chamber 232 of the pumping body 215, when the concentration of the light fraction is small, causes a vaporization of this residual light fraction which might exist in the mixture, which is taken back to the system through the mouth 230 to the conduit 212.

The plunger or compressor piston 228 is moved in a to and fro motion by means of part 227, moved in turn by external media.

With the solution proposed, the distiller of the invention is at the same time a continual condenser of the process vapor, which simultaneously passes on heat to the mixture to be distilled.

This means that the energy cost of the process is very low, as well as the cost of manufacturing the distiller, consisting of a set of substantially identical items, according to a preferential embodiment, connected in series or parallel depending on the needs of each installation.

Furthermore the pumping action, even when this requires an external energy supply, returns the energy absorbed in the form of heat which is transferred to the system to facilitate the separation of the phases that need to be separated.

Within the scope of the invention it is obviously possible to add intermediate elements between the distilling bodies or before the pumping body, such as filters, settling tanks etc., without this altering the essence of the invention described.

In another of the preferential embodiments the pumping body 215 can be replaced by a vacuum pump.

This is for application in building installations for production of fuels from organic oils and fats.

## Claims

1. An installation for biodiesel production, **characterized by** comprising:
• Possibly a support structure (5);
• A tough body or filling (6);
• A set of vessels arranged or formed in the filling of this support structure (5) or tough body (6);
• A reactor circuit which comprises feeding the reagents from at least one pumping system through a first set of heat exchangers (2), a second set of heat exchangers (3) and/or a set of reaction units (4); and
• A thermal insulating filling (7) set between items (2, 3, 4) constituting the reactor and the vessels formed in the structural filling of the structure;
• A pumping device; and
• A distilling device.

2. An installation, according to claim 1, **characterized in that** the support structure consists of a box made of a material able to house the tough filling material at least during the manufacturing phase.

3. An installation, according to claim 1, **characterized in that** the tough filling (6) of said support structure is formed by pouring mass or reinforced concrete which in its formation defines the vessels which will house the different parts of the reactor.

4. An installation, according to claim 1, **characterized in that** the insulating filling placed between the parts of the reactor and the structural filling is thermal sand.

5. An installation, according to claim 1, **characterized in that** the vessels are open only at the top and the different parts of the reactor are fitted in these from the top, and with all the connections also being made from the upper emergent end of said vessels for the parts of the reactor.

6. An installation, according to claim 1, **characterized in that** the first set of heat exchangers (2) comprises a plurality of items arranged in series and/or in parallel, able to obtain part of the heat from the effluents stemming from the reaction units, each of said elements being formed of a double pair of vertically positioned concentric tubes, both the inner and outer tubes being respectively joined at their bottom and having the necessary connections with other items at the top in an emerging portion of the reactor vessels.

7. An installation, according to claims 1 and 6, **characterized in that** each of the interior vessels of the set of primary exchangers comprises a scraping device consisting of a rod (10), coaxial with the tube that has to be cleaned (9), which is supplied with a plurality of scraper devices (11) all along this, said scraper devices being able to allow and guide the passage of the fluid inside the tube.

8. An installation, according to claim 1, **characterized in that** the second set of heat exchangers (3) comprises a plurality of items arranged in series and/or in parallel, able to obtain the heat from a heat source, each of said elements being made up of at least two concentric tubes, in which the external thermal fluid circulates through the outer one, and the reagents of the reactor through the inner one, and having the necessary connections with other items at the top, in an emerging portion of the vessels of the reactor.

9. An installation, according to claim 12, **characterized in that** each part of the secondary exchanger comprises three concentric tubes, with the thermal fluid circulating through the outer one, and the reagents of the reactor through the central ones, having an annular-shaped scraper device in the intermediate tube.

10. An installation, according to claim 9, **characterized in that** each of the intermediate vessels of the set of secondary exchangers comprises a scraping device consisting of a set of rods (10) running through the tube which is to be cleaned (15), which is fitted with a plurality of scraper devices (11) along its length, said scraper devices being able to allow and guide the passage of the fluid inside the tube.

11. An installation, according to either of claims 7 o 10, **characterized in that** the rod or rods (10) fitted with scraper devices (11) is/are driven by means of a hydraulic piston (12) set in the top of each tube, which goes into the corresponding tube through a joint (13).

12. An installation, according to claim 11, **characterized in that** the pumping device of the hydraulic piston (12) is driven by a pumping device separate from the main pumping device of the reactor.

13. An installation, according to claim 12, **characterized in that** the drive pressure of the piston (12) is close to the pressure existing in the reactor.

14. An installation, according to claim 1, **characterized in that** each of the reactor items (4) consists of a pair of concentric tubes (18, 19), arranged vertically, fitted with the relevant connections at the top.

15. An installation, according to any of the previous claims, **characterized by** comprising a cover fitted with leak-detection devices.

16. A pumping device, which comprises a drive piston, according to claim 1, **characterized by** comprising:
• A pumping body; and
• A tank or casing (101) external to said pumping body, which defines a receptacle (102) in which the fluid to be pumped is located;
The pumping body formed of at least two items, which are:
• A hydraulic drive device (104); which receives the hydraulic energy from an external source; and
• A device (105) driven by said drive device, the coupling between drive device (104) and driven device (105) being a mechanical system; the fluid driven by the driven device (105) is led to an outlet line (125); so that any leak that might occur in the pumping device will go into the receptacle (102) which forms the outer casing (101) and houses the pumping body fully or partially in its interior, or onto an external reception device; The tank or external casing comprises a conduit or channeling (106) for filling this, as well as a breather or vent (107) which will prevent any accumulation of gases and depressions or overpressures stemming from the device's operation.

17. A pumping device, according to claim 16, **characterized in that** the hydraulic drive pumping body (104) consists of a hydraulic piston; and the driven pumping device (105) also consists of a hydraulic piston which takes the fluid to be pumped from the receptacle (102).

18. A pumping device, according to claim 17, **characterized in that** the mechanical coupling means consists of at least one connecting rod (114) joined to the pistons (112, 116) formed by each of the drive (104) and driven (105) devices.

19. A pumping device, according to either of claims 17 and 18, **characterized by** comprising a spacing body or device (108) between the hydraulic drive device (104) and the hydraulic driven device (105).

20. A pumping device, according to claim 19, **characterized in that** the spacing device comprises an intermediate chamber (128), said intermediate chamber being supplied with an outlet conduit or channel (129) for any fluid that might leak out of the joints of the connecting rods of the drive (104) and driven (105) devices.

21. A pumping device, according to claim 20, **characterized in that** a secondary guide-piston (130) can slide through the internal chamber (128) of the spacing device (108), this piston-guide being joined to the connecting rods (114) of the drive (104) and driven (105) devices; this piston (130) comprises channels between its two opposite surfaces, in the direction of movement) which allow through gases and/or fluids from one side of said piston (130) to the other.

22. A pumping device, according to any of claims 16 to 21, **characterized in that** both the hydraulic drive device and the hydraulic driven device comprise a set of inlet/outlet mouths (117, 118, 121, 122) and a set of regulation valves, these valves being able to be piloted or consist of check valves in the hydraulic driven device (119, 120, 123, 124).

23. A pumping device, according to any of claims 16 to 22, **characterized in that** the outlet line includes a safety valve (126) with return to the receptacle (102).

24. A pumping device, according to claim 16, **characterized in that** the receptacle (102) comprises at least one level sensor which allows the filling status of said receptacle or the stoppage of the installation to be determined.

25. A pumping device, according to any of claims 22 to 24, **characterized in that** the assembly of the hydraulic drive device (104), the driven device (105), the common connecting rod (114), the secondary piston (130), and the pistons (112, 116) are outside the tank (101), also comprising a casing around the common connecting rod (114) and the secondary piston (130), and the mouths (117, 118, 121, 122) are connected to the tank (101) by means of flexible hoses.

26. A distillation condenser for the mixture to be distilled, in which at least two fractions, with a different boiling point at a specific pressure, have to be separated according to claim 1, **characterized by** comprising:
• At least one inlet line (201) for the mixture to be distilled,
• At least one inlet line (206) for the gas or vapor to be condensed,
• At least one outlet line (202) for the heavy stage of the inlet mixture;
• At least one outlet line (207) for condensates,
• A set of distiller bodies (217), arranged in series and/or in parallel;
• At least one extraction line (211) for each of the bodies of the distiller items of the gases evaporating from the mixture;
• A set of communication lines (208) for the non-evaporated product, said lines (208) leading from the outlet of a distiller body (217) to the inlet of the following distiller body (217), to a pumping device (215), to the outlet (202), or to other devices;
• A set of heat exchangers (221) fitted on the distiller bodies (217);
• A selective outlet (214) for each distiller body (217) enabling the separate extraction in lines for the liquid phase (210) and gas or vapor phase (209); and
• At least one pumping body (215), which on one hand generates the depression necessary in each of the distiller bodies and on the other the compression that will produce the overheating of the effluent vapor or gas.

27. A distillation condenser for a mixture to be distilled, according to claim 26, **characterized in that** each distiller body (217) comprises:
• An interior chamber;
• An inlet mouth (220) for the gases to be condensed;
• An inlet mouth (222) for the mixture to be distilled;
• At least one heat exchanger in which the mixture to be distilled takes heat from the gases to be condensed;
• An outlet (208) for the resulting mixture after the distillation stage;
• A line for extraction (211) of the gas or vapor extracted from the mixture to be distilled;
• A selective outlet (214) of the gases inserted in the exchanger for condensation, so that the liquid phase is led to a condensate line (207), and the gas or vapor phase is incorporated in the following stage as gases to be condensed or taken on to a main outlet.

28. A distillation condenser for a mixture to be distilled, according to claim 26, **characterized in that** the inlet line (206) is connected to a collector (205) with a line (204) for reception of the gases or vapor coming from the process carried out in the same distiller, with a line (203) for reception of gas or vapor from other processes, or a combination of both.

29. A distillation condenser for a mixture to be distilled, according to claim 26, **characterized in that** the pumping body (215) comprises:
• An entry channel (231) for the gases or vapor;
• A chamber (226) for compression and absorption of the gases or vapor;
• A plunger or compressor piston (228) driven through a part (227) in turn moved by external mechanical means;
• A set of inlet (235) and outlet (234) valves for the compression and absorption chamber; and
• An outlet (204) for the compressed gases.

30. A distillation condenser for a mixture to be distilled, according to claim 29, **characterized in that** the pumping body (215) also comprises:
• An inlet mouth (225) for the mixture to be distilled;
• An outlet (202) for the resulting product;
• A chamber (232); and
• An outlet (230) for the distilled vapors stemming from the mixture to be distilled.

31. A distillation condenser for a mixture to be distilled, according to claim 30, **characterized in that** the chamber (232) comprises at least one heat exchanger (229) in which the gases compressed in the pumping body give off heat which is taken in by the mixture to be distilled.

32. A distillation condenser for a mixture to be distilled according to claims 30 or 31, **characterized by** comprising a selective outlet (14) for the gases inserted into the exchanger for condensation, so that the liquid phase is led to a condensates line (207), and the gas or vapor phase is incorporated in the following stage as gases to be condensed, or taken on to a main outlet.

33. A distillation condenser for a mixture to be distilled, according to claims 26 to 29, **characterized in that** the extraction lines (211, 212) of the gas or vapor stage of the distiller bodies (217) and of the pumping body (215) are all or partly connected to each other, and said lines are led to an inlet line (213) of the vapor phase, and consequently to the inlet channel (231) of the pumping body (215).

34. A distillation condenser for a mixture to be distilled, according to any of claims 26 to 33, **characterized in that** the pumping device (215) is formed of a vacuum pump.
